# FASCICULE DE BREVET EUROPEEN

(11) **EP 3 391 028 B1**
(45) Date de publication et mention de la délivrance du brevet: **16.08.2023**
(21) Numéro de dépôt: 16826395.2
(22) Date de dépôt: 16.12.2016
(51) Int. Cl.: G01N 21/03, G01N 21/64

(54) **CUVETTE D'ANALYSE AVEC AMPLIFICATION DE SIGNAL, BARRETTE ET DISPOSITIF D'ANALYSE**
ANALYSENKÜVETTE MIT SIGNALVERSTÄRKUNG, ANALYSEBALKEN UND ANALYSEGERÄT
ANALYSIS CUVETTE WITH SIGNAL AMPLIFICATION, ANALYSIS BAR AND ANALYSIS DEVICE

(30) Priorité: 18.12.2015 FR 1562721
(43) Date de publication de la demande: 24.10.2018
(73) Titulaire: Biomérieux, 69280 Marcy-L'Etoile (FR)
(72) Inventeur: FOUCAULT, Frédéric, 69280 Marcy l'Etoile (FR); VINIT, Cécile, Les Olmes 69490 (FR)
(74) Mandataire: bioMérieux PI Groupement mandataires
(86) Numéro de dépôt international: PCT/FR2016/053507
(87) Numéro de publication internationale: WO 2017/103522

(56) Documents cités:
- WO-A1-97/19339
- FR-A1- 3 000 218
- US-A- 4 453 639
- US-A- 5 488 473
- US-A1- 2008 151 249
- US-A1- 2011 093 207
- US-A1- 2012 301 872

## Description

La présente invention concerne, de manière générale, le domaine de l'analyse d'échantillons à tester et plus particulièrement une barrette d'analyse. Cette barrette est éventuellement associée à un réceptacle contenant un cône adapté pour être utilisé avec la barrette d'analyse pour une analyse d'échantillon spécifique.

FR3000218A1 décrit une barrette d'analyse comprenant une pluralité de cuvettes et un cône apte à aspirer une quantité de liquide.

Dans le domaine de l'analyse d'échantillons susceptibles de contenir des analytes d'intérêt, il est connu d'utiliser des méthodes basées sur des mesures spécifiques telles que des mesures de signaux. L'analyse de l'échantillon à tester doit donc comprendre la mise en œuvre d'un réactif, représentatif de l'analyte à détecter ou à quantifier dans l'échantillon. Le réactif permet d'obtenir un produit de réaction. Le milieu issu de l'échantillon à tester et contenant le produit de réaction est alors un milieu de réaction. Ainsi, les mesures spécifiques peuvent comprendre, par exemple, des mesures fluorimétriques, c'est-à-dire des mesures permettant de quantifier des signaux de fluorescence émis au cours de l'analyse biologique de l'échantillon. Dans cette situation, le produit de réaction obtenu possède des propriétés de fluorescence. En application du principe de fluorescence, un tel produit de réaction exposé à une source lumineuse, correspondant à une première longueur d'onde dite longueur d'onde d'excitation, émet à son tour des rayons lumineux selon une deuxième longueur d'onde dite longueur d'onde d'émission. La détection des signaux de fluorescence, dans ce milieu de réaction, associée à un traitement du signal de ces signaux de fluorescence, permet de déterminer, par exemple, la présence ou la concentration de l'analyte spécifique recherché au sein de l'échantillon à tester. Bien évidemment, d'autres types d'analyses d'échantillons mettant en œuvre une barrette d'analyse et un réceptacle contenant un cône adapté peuvent être envisagés.

Des analyses d'échantillons peuvent être réalisées à l'aide d'un dispositif d'analyse dans lequel est introduite une barrette d'analyse comprenant au moins deux cuvettes, chacune remplie d'un liquide particulier. La barrette d'analyse comprend, de façon générale, une cuvette adaptée pour recevoir un échantillon à tester.

Lors de l'analyse de cet échantillon, on utilise un cône ou une pipette pour aspirer une quantité dudit échantillon et déposer ledit échantillon à l'intérieur des différentes cuvettes présentes dans la barrette d'analyse. Les liquides présents à l'intérieur des différentes cuvettes peuvent réagir avec l'échantillon à tester pour obtenir, à la fin d'un cycle de transfert de liquides, par exemple d'une cuvette à une autre, un liquide, ou milieu de réaction, sur lequel les mesures d'un signal peuvent être effectuées.

Afin d'assurer un déroulement optimal d'une telle analyse, pour laquelle une barrette d'analyse est utilisée en combinaison avec un cône, il est important de combiner, d'une part une barrette d'analyse, et d'autre part un cône adapté pour cette barrette d'analyse. Le cône adapté provient, par exemple, du même lot que celui de la barrette d'analyse. Le cône et la barrette étant produits séparément et ayant des dates de péremption différentes, il convient donc de s'assurer qu'un lot contient effectivement un cône et une barrette d'analyse pour la même cible/paramètre et dont la date de péremption ne soit pas dépassée.

Le cône adapté peut également contenir une partie des réactifs nécessaires à l'émission du signal, la barrette d'analyse contenant l'autre partie des réactifs. Ainsi, cette combinaison correcte garantit que le dispositif d'analyse, utilisant l'ensemble comprenant la barrette d'analyse et le cône, fournira un résultat d'analyse associé à cette combinaison. En effet, lors de l'utilisation de l'ensemble composé d'une barrette d'analyse et d'un cône, l'utilisateur peut manipuler par erreur une barrette d'analyse en combinaison avec un cône n'étant pas destiné à être utilisé avec ladite barrette d'analyse. Cette erreur peut engendrer des résultats erronés concernant l'analyse réalisée, tels que des résultats faux négatifs.

Un des problèmes les plus importants avec ces tests utilisant des mesures fluorimétriques réside dans le niveau et la qualité (faible bruit de fond) des signaux de fluorescence émis. S'ils sont trop faibles parce que les réactions biologiques associées ne sont pas suffisamment nombreuses, il y a un risque que l'utilisateur ou l'appareil, s'il s'agit d'un système automatisé, classe facilement le résultat du test comme étant négatif alors qu'il est en fait positif. C'est ce qui est appelé un faux négatif. Cette situation est celle que :
- le fabricant des kits,
- le fabricant de l'appareil,
- l'utilisateur ou le praticien,
- le patient,
redoutent le plus car dans ce cas le patient et l'ensemble des professionnels ci-dessus mentionnés penseront que le patient est en bonne santé sur le paramètre étudié alors que c'est erroné.

US20110093207 A1 décrit un système pour effectuer l'identification et la quantification de microorganismes, par exemple, des bactéries dans des échantillons biologiques en utilisant une cuvette fabriquée en deux parties. La pièce supérieure ne présente pas de fond et se ferme grâce à la pièce inférieure qui peut-être revêtue d'un revêtement réfléchissant.

La présente invention propose de limiter de manière très significative le nombre de faux négatifs en proposant une technique qui amplifie facilement la fluorescence d'émission.

A cet effet, la présente invention concerne une cuvette d'analyse d'un échantillon biologique, telle que définie dans la revendication 1.

Selon un mode de réalisation de la cuvette et du manchon, la forme intérieure dudit manchon épouse partiellement la forme extérieure de la cuvette à l'exception d'au moins une zone permettant, d'une part, l'éclairage à une longueur d'onde d'excitation, d'autre part, la détection de la longueur d'onde d'émission depuis l'extérieur de ladite cuvette.

Selon un autre mode de réalisation de la cuvette et du manchon, le matériau rétro-réfléchissant est soit à prismes soit à billes.

Selon un mode de réalisation de la cuvette et du manchon, le manchon est fixé sur la cuvette par collage sans détérioration des qualités optiques de la face intérieure dudit manchon.

Selon ce dernier mode de réalisation, la colle est transparente ou translucide et n'absorbe pas les UV.

Selon encore un autre mode de réalisation de la cuvette et du manchon, le manchon est fixé sur la cuvette par clipsage mécanique.

Toujours selon un autre mode de réalisation de la cuvette et du manchon, le revêtement interne en matériau rétro-réfléchissant n'est pas solidaire de la cuvette mais est pris en sandwich entre ladite cuvette et le manchon, formant clips.

Selon une variante de tous ces modes de réalisation, le manchon est présent en tout ou partie au niveau de la ou des cloisons latérales de la cuvette et il est absent au niveau du fond de la cuvette.

La présente invention concerne également une barrette d'analyse pour effectuer une analyse d'un échantillon, telle que définie dans la revendication 9.

Selon un mode de réalisation de la barrette, la pluralité des cuvettes sont positionnées selon un axe longitudinal et que la première cuvette est adaptée pour recevoir l'échantillon et la dernière cuvette est adaptée pour permettre la lecture d'un signal émis par le milieu réactionnel, issu de l'échantillon, lors de l'analyse et correspond à la cuvette telle que décrite précédemment.

La cuvette d'analyse, décrite précédemment, ou la barrette d'analyse, ci-dessus exposée, peut être utilisée pour l'analyse d'un échantillon par un dosage immunologique.

Par exemple,dans la cuvette ou la barrette d'analyse:
- une réaction enzymatique entre un substrat et une enzyme est réalisée,
- cette réaction aboutissant à un produit de dégradation sous la forme d'une molécule fluorescente,
- la molécule fluorescente subissant un éclairage à une longueur d'onde d'excitation se traduisant en retour par de la fluorescence à une longueur d'onde d'émission, qui est spécifique d'au moins un analyte présent au sein de l'échantillon biologique.

L'invention concerne enfin un dispositif d'analyse pour une cuvette ou une barrette d'analyse, telle que définie dans la revendication 11.

Les figures ci-jointes sont données à titre d'exemple explicatif et n'ont aucun caractère limitatif. Elles permettront de mieux comprendre l'invention.
La **Figure 1** représente une vue en perspective avant l'emboîtement du papier rétro-réfléchissant sur le clip et la cuvette de lecture de la barrette, en présence d'un cône de détection.
La **Figure 2** représente une vue en perspective avant l'emboîtement du clip sur le papier rétro-réfléchissant et la cuvette de lecture de la barrette.
La **Figure 3** représente une vue en perspective de dessous de la cuvette de lecture avant la mise en place du papier rétro-réfléchissant et du clip.
La **Figure 4** représente une vue en perspective de dessous de la cuvette de lecture après la mise en place du papier rétro-réfléchissant et du clip.
La **Figure 5** représente une vue en perspective de dessus de la cuvette de lecture avant la mise en place du papier rétro-réfléchissant et du clip.
La **Figure 6** représente une vue en perspective de dessus de la cuvette de lecture après la mise en place du papier rétro-réfléchissant et du clip.
La **Figure 7** représente une feuille de papier rétro-réfléchissant selon l'invention selon un mode de réalisation à trois faces et avant mise en forme.
La **Figure 8** représente une feuille de papier rétro-réfléchissant selon l'invention selon un mode de réalisation à quatre faces mais après mise en forme.
La **Figure 9** représente une vue en perspective d'un mode de réalisation du manchon ou clip avant la mise en place en son sein de la feuille de papier rétro-réfléchissant.
La **Figure 10** représente une vue en perspective d'un mode de réalisation du manchon ou clip selon la **Figure 9** après la mise en place en son sein de la feuille de papier rétro-réfléchissant selon la **Figure 4****.**
La **Figure 11** montre une vue en coupe d'un système rétro-réfléchissant basé sur des micro-billes de verre plusieurs rayons lumineux entrants selon une première direction F1 dits longueur d'onde d'excitation, qui après réflexion sur la paroi intérieure du revêtement interne demi-circulaire du volume sphérique, sont réfléchis sous forme de rayons lumineux sortants suivant une direction F2, dits longueur d'onde d'émission. Les directions F1 et F2 sont parallèles.
La **Figure 12** représente une figure identique à la **Figure 11** à l'unique différence que la paroi intérieure du revêtement interne est de forme polyédrique à au moins deux faces perpendiculaires l'une à l'autre.
La **Figure 13** représente un graphe montrant la détermination de la dose observée avec ou sans le manchon selon l'invention dans un kit VIDAS^{®} TNI Ultra.
La **Figure 14** est semblable au graphe de la **Figure 13** de la détermination de la dose observée avec ou sans l'invention dans un kit VIDAS^{®} TNI Ultra mais en zoomant sur la zone de concentration comprise entre 0 et 1000 ng/L.
Enfin la Figure 15 est une représentation graphique de l'étude de répétabilité des échantillons B et C dosés avec le kit VIDAS^{®} TNI Ultra avec ou sans présence du manchon selon l'invention. Les deux colonnes claires représentent l'échantillon B ou C dosés sans présence dudit manchon. Les deux colonnes foncées représentent l'échantillon B ou C dosés en présence dudit manchon.

La description détaillée ci-après a pour but d'exposer l'invention de manière suffisamment claire et complète, notamment à l'aide d' exemples présentés ci-après qui permettront de mieux appréhender la présente invention. Toutefois, ces exemples ne sont donnés qu'à titre illustratif et ne doivent en aucun cas être regardés comme limitant la portée de ladite invention qui est définie dans les revendications annexées.

La présente invention est caractérisée par le fait qu'une partie de la cuvette est partiellement recouverte extérieurement d'un manchon dont le revêtement interne en contact avec ladite cuvette est en matériau rétro-réfléchissant.

Un matériau rétro-réfléchissant s'entend par tout matériau qui possède la propriété de réfléchir la lumière vers la source. Autrement dit lorsqu'un photon d'excitation heurte le matériau rétro-réfléchissant ce photon est réfléchi vers l'axe de lecture.

La présente divulgation concerne l'analyse, telle que l'analyse biologique d'échantillons. L' échantillon peut être de diverses origines, par exemple d'origine alimentaire, environnementale, vétérinaire, clinique, pharmaceutique ou cosmétique.

Parmi les échantillons d'origine alimentaire, l'on peut citer, de façon non-exhaustive, un échantillon de produits lactés (yaourts, fromages, etc.), de viande, de poisson, d'œuf, de fruit, de légume, d'eau, de boisson (lait, jus de fruits, soda, etc.). Bien évidemment, ces échantillons d'origine alimentaire peuvent aussi provenir de sauces ou de plats plus élaborés ou de matières premières non transformées ou partiellement transformées. Un échantillon alimentaire peut également être issu d'une alimentation destinée aux animaux, telle que des tourteaux, des farines animales.

Tel qu'indiqué précédemment, l'échantillon peut être d'origine environnementale et peut consister, par exemple, en un prélèvement de surface, d'eau, etc.

L'échantillon peut également consister en un échantillon biologique, d'origine clinique, humaine ou animale, pouvant correspondre à des prélèvements de fluide biologique (urine, sang total ou dérivés tels que sérum ou plasma, salive, pus, liquide céphalo-rachidien, etc.), de selles (par exemple diarrhées cholériques), de prélèvements de nez, de gorge, de peau, de plaies, d'organes, de tissus ou de cellules isolées. Cette liste n'est évidemment pas exhaustive.

D'une manière générale, le terme « échantillon » se réfère à une partie ou à une quantité, plus particulièrement une petite partie ou une petite quantité, prélevée à partir d'une ou plusieurs entités aux fins d'analyse. Cet échantillon peut éventuellement avoir subi un traitement préalable, incluant par exemple des étapes de mélange, de dilution ou encore de broyage, en particulier si l'entité de départ est à l'état solide.

L'échantillon analysé est susceptible de - ou suspecté de - contenir au moins un analyte représentatif de la présence de micro-organismes ou d'une maladie à détecter, caractériser ou suivre. L'analyse d'échantillons peut mettre en œuvre une réaction entre l'analyte d'intérêt et un ou des partenaire(s) de liaison spécifique(s) à l'analyte. Selon un exemple,

la réaction est une réaction immunologique et l'analyte à déterminer est une protéine, un peptide ou un haptène. Cette réaction implique comme partenaire(s) de liaison des antigènes et/ou des anticorps, des récepteurs à l'analyte. A titre d'exemples de réactions immunologiques, on peut citer les réactions dites « de compétition » et les réactions dites « sandwich » mises en œuvre dans des dosages type ELISA ou ELFA.

Bien entendu, le terme « immuno » dans « immunodosage » n'est pas à considérer dans la présente demande comme indiquant strictement que le partenaire de liaison est un partenaire immunologique, tel qu'un anticorps. En effet, l'Homme du Métier utilise également largement ce terme lorsque le partenaire de liaison, aussi appelé ligand, n'est pas un partenaire immunologique mais est, par exemple, un récepteur à l'analyte que l'on veut doser. Ainsi, il est connu de parler du dosage ELISA (Enzyme-Linked Immunosorbent Assay) pour des dosages qui utilisent des partenaires de liaison non immunologiques, appelés plus largement en anglais « Ligand Binding Assay », que l'on pourrait traduire par « Dosage utilisant la liaison à un ligand », alors que le terme même « immuno » est inclus dans l'acronyme ELISA. Par souci de clarté, la Demanderesse utilisera dans la demande le terme « immuno » pour tout dosage d'un analyte protéique utilisant un partenaire de liaison, même quand il n'est pas un partenaire immunologique.

La réaction peut également être une réaction d'hybridation et l'analyte à déterminer est un acide nucléique de type ADN ou ARN, à savoir une réaction qui implique un fragment nucléotidique complémentaire de l'analyte à déterminer.

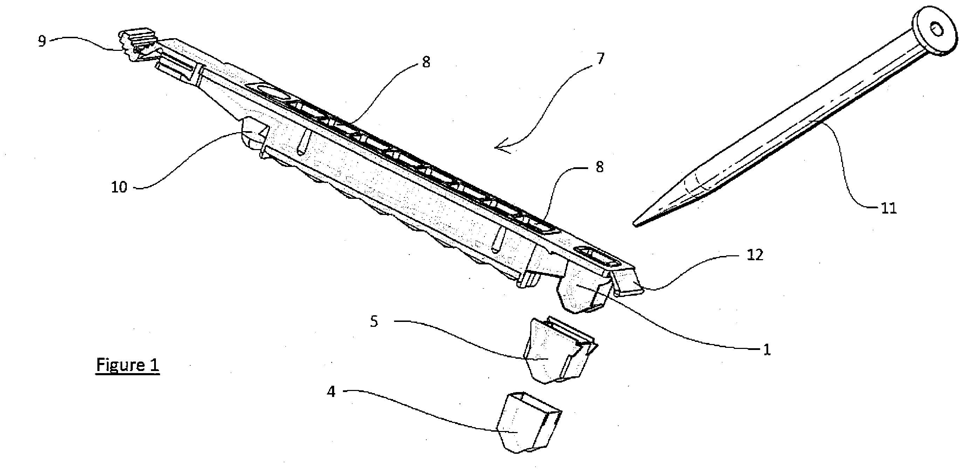

La **Figure 1** montre une barrette d'analyse 7 selon l'art antérieur et un cône 11, adapté pour être utilisé avec la barrette d'analyse 7. La barrette d'analyse 7 comprend un support 9 adapté pour manipuler la barrette d'analyse 7. La barrette d'analyse 7 comprend une première cuvette 10, une pluralité de cuvettes 8, c'est-à-dire au moins deux cuvettes 8. La barrette d'analyse 7 comprend également une dernière cuvette 1. Chaque cuvette 8 est adaptée pour recevoir et conditionner des liquides ou fluides utilisés lors d'une analyse biologique d'échantillons. Un film protecteur (non montré) localisé sur les rebords supérieurs des cuvettes permet de recouvrir de manière étanche les différents contenus des différentes cuvettes 1, 8 et 10. Le film protecteur peut être percé avec le cône 11 lors de l'utilisation de la barrette d'analyse 7 ou bien le film recouvrant la cuvette 10 peut être pré-percé ou pas pour recevoir l'échantillon. La première cuvette 10, par exemple de forme cylindrique, est adaptée pour recevoir un échantillon à analyser.

Les cuvettes 8 contenant des liquides sont obturées sur toutes leurs faces et comprennent des réactifs nécessaires à la réaction pour déterminer la présence de l'analyte à tester ou pour quantifier l'analyte. En particulier, l'une des cuvettes 8 comprend un réactif qui, selon les conditions d'analyse, par exemple en présence de l'analyte à détecter ou quantifier, est capable de générer un produit de réaction émettant un signal si l'analyte est présent dans ledit échantillon. L'analyse de l'échantillon est basée sur ce produit de réaction. Le produit de réaction est le résultat du déplacement d'au moins une partie de l'échantillon de la première cuvette 10, via les cuvettes 8, vers la dernière cuvette 1.

Au cours d'une analyse d'un échantillon, le transport de liquide entre les différentes cuvettes 1, 8 et 10 est effectué à l'aide du cône 11 montré sur la **Figure 1****.** Le cône 11 est utilisé comme phase solide à la réaction puisque l'intérieur du cône est recouvert d'au moins un partenaire de liaison à l'analyte. Le cône 11 permet d'aspirer du liquide depuis la première cuvette 10 afin de refouler le liquide aspiré à l'intérieur d'une cuvette 8 pour obtenir un premier mélange. Puis le cône 11 aspire ce premier mélange et refoule le premier mélange au sein d'une autre cuvette 8 pour obtenir un deuxième mélange et ainsi de suite jusqu'à la dernière cuvette 1 dans laquelle le milieu de réaction est refoulé. Selon le type d'analyse souhaitée, toutes ou certaines cuvettes 8 peuvent être nécessaires à l'analyse du milieu de réaction issu de l'échantillon initialement prélevé dans la cuvette 10.

Comme montré sur la **Figure 1****,** la barrette d'analyse 7 comprend une dernière cuvette 1 localisée à la deuxième extrémité de la barrette d'analyse 7. La dernière cuvette 1 comprend des parois verticales qui possèdent une épaisseur de l'ordre du millimètre. Les parois verticales sont réunies par une base comprenant deux parois inclinées et jointives.

L'analyse de l'échantillon est réalisée en utilisant une étape d'illumination et une étape de détection simultanées du signal émis par le contenu de cette dernière cuvette 1. Afin d'optimiser le déroulement d'une analyse d'un échantillon et la fiabilité des résultats obtenus en analysant le contenu de la dernière cuvette 1, il est important, lors des analyses, qu'une barrette d'analyse 7 soit correctement appariée avec le cône utilisé pour le transfert des différents fluides au sein des différentes cuvettes de la barrette d'analyse 7.

Lorsqu'une barrette d'analyse 7 et un cône 11 sont introduits manuellement dans un dispositif d'analyse d'échantillon (non montré), l'opérateur doit être attentif et utiliser la combinaison correcte d'une barrette d'analyse et d'un cône. Si le dispositif d'analyse comprend plusieurs supports de barrette, tels que des rails, l'opérateur doit exécuter avec attention un nombre de manipulations égal au nombre de rails pour chaque test. Ces diverses manipulations consistent, avant le test, à insérer la barrette d'analyse et à insérer le cône correspondant, et, après la réalisation du test, à retirer la barrette d'analyse et à retirer le cône.

Afin d'assister l'opérateur ou le dispositif d'analyse automatisé, et afin de garantir un appariement correct d'une barrette d'analyse et d'un cône, la barrette d'analyse et le cône peuvent être munis d'un identifiant permettant d'identifier le type de la barrette d'analyse et du cône utilisés, leur date d'expiration, leur numéro de lot, etc.

La description qui suit concerne une barrette d'analyse, et un dispositif d'analyse selon la présente invention.

Dans la description qui suit, la référence à une cuvette comprend, par exemple, toute cuvette comprenant une paroi continue de forme oblongue ou toute cuvette comprenant des parois verticales réunies par une base comprenant, par exemple, deux parois inclinées et jointives.

Dans la description qui suit, la référence au film protecteur comprend tout type de film, par exemple bicouche ou tri-couche, réalisé par exemple en polyéthylène téréphtalate (PET)/aluminium/polyéthylène (PE) .

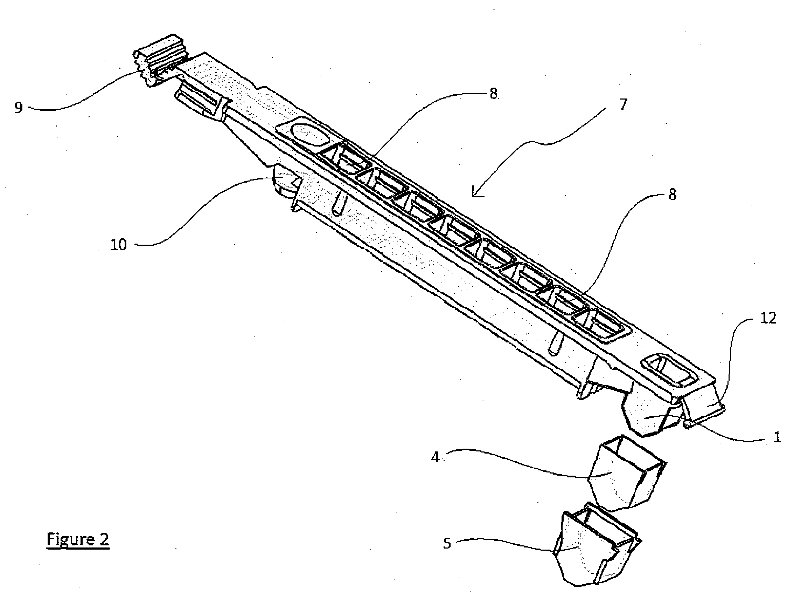

Les **Figures 1** **et** **2** montre selon la présente invention la manière dont la qualité des signaux de fluorescence émis est améliorée.

Selon le mode de réalisation de la **Figure 1****,** la cuvette d'analyse 1 reçoit extérieurement un manchon 5, qui lui-même reçoit extérieurement un revêtement interne à quatre faces 4.

Selon le mode de réalisation de la **Figure 2****,** la cuvette d'analyse 1 reçoit extérieurement un revêtement interne à quatre faces 4, qui lui-même reçoit extérieurement un manchon 5.

Dans les deux cas de figure, ce revêtement interne à quatre faces 4 est en un matériau rétro-réfléchissant. Il est bien évident que pour faire son office, dans le cas du mode de réalisation de la **Figure 1****,** le manchon 5 doit être en un matériau transparent voire translucide permettant à la lumière de passer au travers dudit manchon 5 pour venir frapper le revêtement 4.

Bien entendu il est également possible que le revêtement 4 et le manchon 5 soient solidaires l'un de l'autre pour ne former qu'une pièce appelé manchon complexe ou composé 4 et 5.

Le concept se base donc sur la mise en place d'une « chaussette » ou manchon complexe 4 et 5 sur la cuvette du substrat ou d'analyse 1 d'une barrette 7, sans modification de ladite barrette 7.

Ce manchon composé 4 et 5 apporte des propriétés optiques particulières de rétro-réflexion. Une partie des photons d'excitation traverse la cuvette d'analyse 1 sans interagir avec la molécule fluorescente issue de la dégradation du substrat par l'enzyme. Les propriétés de rétro-réflexion du manchon complexe 4 et 5 permettent de faire repartir ces photons d'excitation incidents dans la direction d'où ils sont venus et donc de repasser une nouvelle fois dans la cuvette d'analyse 1 et potentiellement réagir avec une molécule fluorescente.

Le photon d'émission n'est quant à lui pas forcément émis dans l'axe du détecteur. Par conséquent, un photon d'émission peut également être rétro-réfléchi lorsqu'il atteint le manchon 4 et 5 et être cette fois-ci capturé par le capteur. Comme toutes surfaces, les films rétro-réfléchissants sont partiellement réfléchissants. Cette propriété apporte également un gain supplémentaire à l'ensemble. En effet, lorsque qu'un photon d'émission heurte une face de la cuvette 1, munie du revêtement 4, sous un angle α par rapport à la normale de la face considérée, et que l'angle de réflexion β (α = β) se superpose à l'axe de lecture du système, ce photon est réfléchi vers l'axe de lecture. Sans cette réflexion spécifique et complémentaire, ces photons n'auraient pas été détectés et le signal aurait été moins fort.

Différents essais ont été conduits pour déterminer un design optimal, le matériau avec les meilleures propriétés dans le cadre du Vidas. De nombreux essais ont aussi visé à trouver un moyen de mise en œuvre sans pénaliser les propriétés optiques.

### Matériaux :

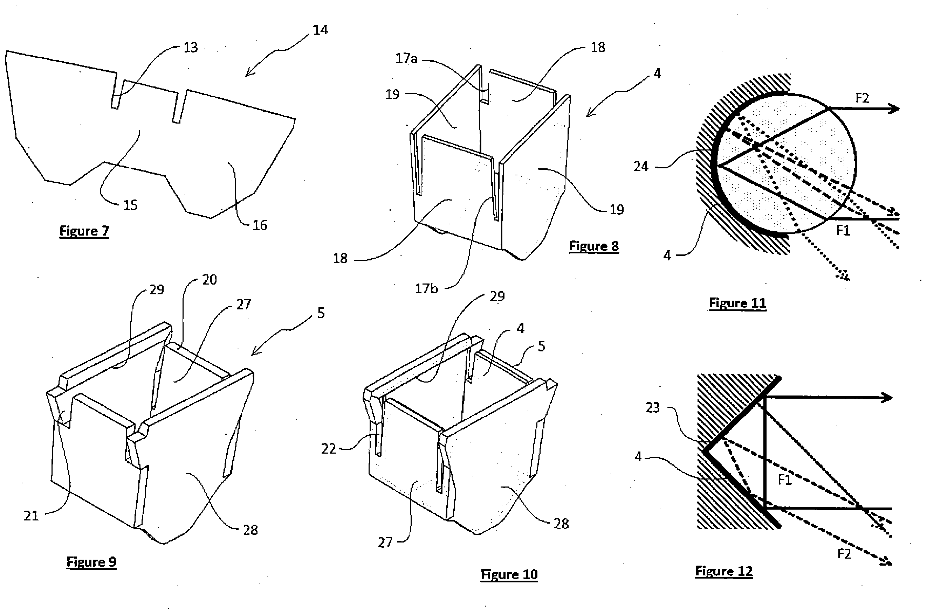

Différents matériaux rétro-réfléchissants ont été approvisionnés. Ces matériaux se rangent dans deux types distincts :
- Les rétro-réfléchissants à billes (souvent billes de verre) où la partie réfléchissante est de forme hémisphérique 24, voir la **Figure 11****,** et
- Les rétro-réfléchissants à prismes (plastique) où le fond de la partie réfléchissante est de forme à angle droit 23, voir la **Figure 12****.**

Les matériaux retro-réfléchissants qui ont été testés l'ont été sur un appareil d'immunologie Vidas^{®} (bioMérieux - Marcy l'Etoile - France - Référence : VIDAS^{®} 30 Legacy, référence 410417) à l'aide du test VIDAS TNI Ultra (bioMérieux - Marcy l'Etoile - France - Référence : 30448). Ces matériaux sont les suivants :
- Rétro-réfléchissant 231WW (Signs & Labels - Stockport-Angleterre, référence : 231WW ou Radiospares - Beauvais-France, référence : 763-2042),
- Rétro-réfléchissant Testo (Testo - Forbach - France, référence 0554 0493 ou Radiospares - Beauvais, France, référence : 188-393),
- Rétro-réfléchissant Mactac 4700 (MACtac France-Morangis - France, référence 4700),
- Rétro-réfléchissant Mactac 5700 (MACtac France-Morangis - France, référence 5700),
- Rétro-réfléchissant XUZB11 (Schneider-Electric - Rueil Malmaison - France, référence : XUZB11 ou Radiospares-Beauvais - France, référence : 324-1620).

Lorsque l'on prend des feuilles de ces matériaux avec un appareil photo sans flash puis avec flash, on remarque d'ores et déjà des différences notables entre les films rétro-réfléchissants.

Le meilleur matériau dans son utilisation avec VIDAS^{®} est le Télémécanique qui correspond à l'agencement de micro-catadioptres ou de micro-tétraèdres. Ce tétraèdre correspond à un cube coupé par un plan passant par trois sommets opposés par les diagonales. Ce matériau présente une anisotropie visuelle, c'est-à-dire qu'il ne présente pas le même comportement optique (ici réflexion) suivant la direction d'observation.

### Montage du matériau rétro-réfléchissant sur la cuvette 1 :

Plusieurs options ont été évaluées en biologie avec un test VIDAS^{®} TNI Ultra :
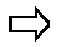 Collage sur la cuvette substrat avec plusieurs types d'adhésifs double-face:
   ∘ TESA 4972 (TESA France - Lieusaint - France, référence : 4972),
   ∘ TESA 4959 (TESA France - Lieusaint - France, référence : 4959),
   ∘ Arcare 8570 (Adhesives Research Ireland Ltd-Limerick - Ireland, référence: 8570),
   ∘ Mactac PT2113 (MACtac France - Morangis - France, référence PT2113).
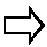 Clipsage mécanique sur la cuvette 1 :
   ∘ Bagclip (Interscience - Saint Nom - France, référence : 231 040),
   ∘ Reliure de document (Office Dépôt - Dardilly - France, référence : 0017103).

A noter que pour les clips, ceux-ci doivent rester compatibles avec l'automate VIDAS^{®}, notamment dans la taille.

### Résultats biologiques :

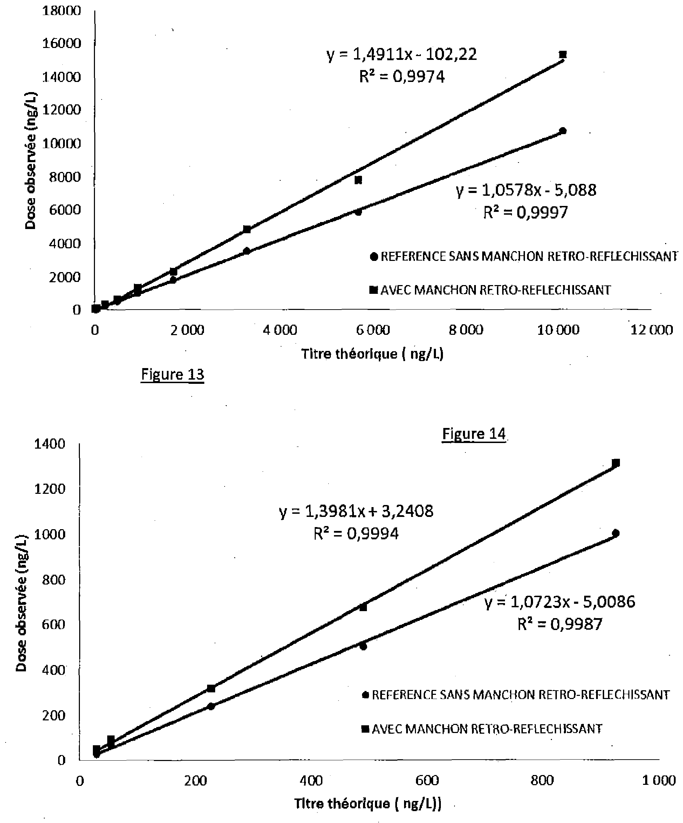

De nombreux tests ont été réalisés afin de déterminer l'impact de ces manchons 4+5 sur une gamme de concentrations en troponine I cardiaque (**Figures 13 et 14**) mais aussi sur la répétabilité des expériences (Tableau 1 et Figure 15). Cette gamme est composée d'une matrice sérique dans laquelle a été rajoutée de la troponine I cardiaque recombinante à différentes concentrations.

On observe une augmentation de la concentration ou dose de l'ordre de 40% par rapport à la dose théorique en présence d'un manchon 5 recouvert en son sein par un revêtement rétro-réfléchissant présent sur quatre faces. A noter également que la répétabilité de ces performances est très satisfaisantes comme cela est bien démontré sur les Tableau 1 et Graphe 3. Les échantillons B et C sont composés d'une matrice sérique surchargée avec de la troponine I cardiaque recombinante. Le titre théorique de B est de 30 ng/L et C est de 55 ng/L.

**Tableau 1 : Etude de répétabilité des échantillons B et C dosés avec le kit VIDAS^{®} TNI Ultra avec ou sans la présence du manchon selon l'invention**

| | Sans manchon rétro-réfléchissant | | | Avec manchon rétro-réfléchissant | | |
|---|---|---|---|---|---|---|
| Echantillon | Dose observée (ng/L) | Dose moyenne (ng/L) | CV (%) dose | Dose observée (ng/L) | Dose moyenne (ng/L) | CV (%) dose |
| B | 40 | 33,33 | 15,49% | 70 | 68,33 | 5,97% |
| | 30 | | | 70 | | |
| | 30 | | | 70 | | |
| | 40 | | | 70 | | |
| | 30 | | | 70 | | |
| | 30 | | | 60 | | |
| | | | | | | |
| C | 50 | 50,00 | 0,00% | 80 | 81,67 | 5,00% |
| | 50 | | | 80 | | |
| | 50 | | | 80 | | |
| | 50 | | | 80 | | |
| | 50 | | | 90 | | |
| | 50 | | | 80 | | |

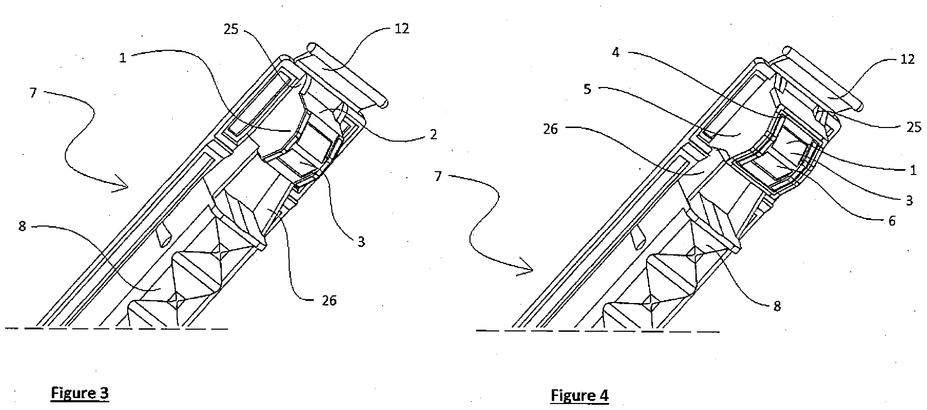

La **Figure 3** montre l'extrémité de la barrette 7 en gros plan et vue de dessous au niveau de la cuvette d'analyse 1. On note la présence au bout de la barrette 7 d'un ergot de positionnement 12 qui facilite la mise en place de ladite barrette 7 au sein d'un automate, non représenté sur les figures, adapté à la réalisation des tests biologiques associés à la barrette 7. Sur cette figure ladite cuvette 1 est à nu c'est-à-dire sans aucun élément rapporté. Elle est composée de quatre parois sensiblement verticales et plates et de deux parois de fond 3 qui, ensemble, cloisonnent la cuvette d'analyse 1. La **Figure 4** montre l'extrémité de la barrette 7 en gros plan et vue de dessous au niveau de la cuvette d'analyse 1. Sur cette figure, identique à la précédente, ladite cuvette 1 est recouverte par le revêtement 4 et le manchon 5. Cette cuvette 1 est toujours composée de quatre parois sensiblement verticales et plates, mais recouvertes par le manchon complexe 4 et 5, et de deux parois de fond 3 qui, ensemble, cloisonnent la cuvette d'analyse 1 mais ne sont pas recouvertes par le manchon 4 et 5. De ce fait il y a création d'une zone 6 qui va permettre notamment la lecture.

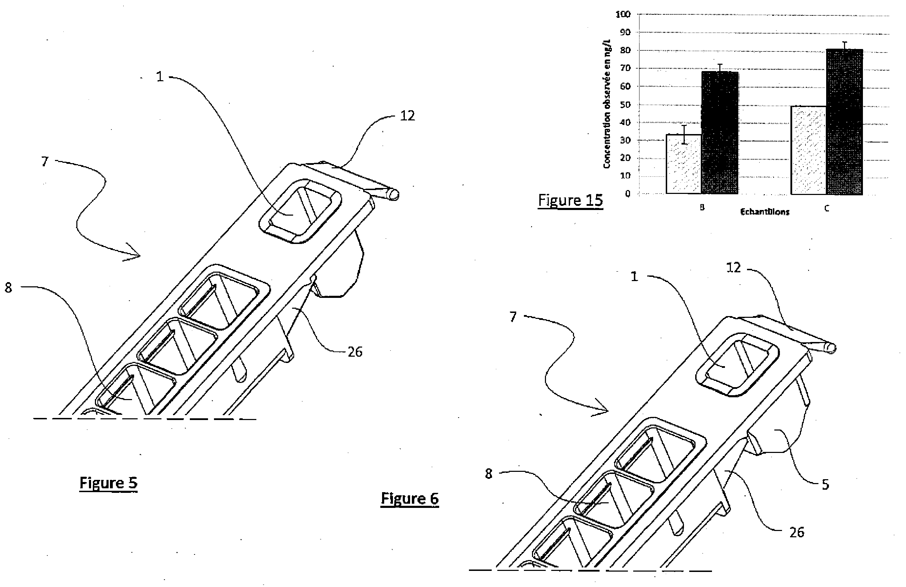

La **Figure 5** montre l'extrémité de la barrette 7 en gros plan et vue de dessus au niveau de la cuvette d'analyse 1. Il y a encore présence au bout de la barrette 7 de l'ergot de positionnement 12. Sur cette figure ladite cuvette 1 est à nu c'est-à-dire sans aucun élément rapporté. La **Figure 6** montre l'extrémité de la barrette 7 en gros plan et vue de dessus au niveau de la cuvette d'analyse 1. Sur cette figure, identique à la précédente, ladite cuvette 1 est recouverte par le manchon 5, le revêtement 4 étant non visible sur cette figure car pris en sandwich entre la cuvette 1 et ledit manchon 5.

La **Figure 7** représente une feuille de papier rétro-réfléchissant 14 selon l'invention dans un autre mode de réalisation non représenté auparavant. Ainsi ce revêtement rétro-réfléchissant 14 est constitué d'une feuille à trois faces : une face centrale 15 et deux faces latérales 16.

On note également la présence d'encoches de positionnement 13 du revêtement trois faces 14 qui facilite son pliage pour sa mise en forme puis sa mise en place au plus près de la cuvette d'analyse 1, qui est elle-même constituée de petites nervures 25 et de grandes nervures 26 bien visibles sur les Figures 3 à 6.

La **Figure 8** représente une feuille de papier rétro-réfléchissant 4 selon l'invention selon un mode de réalisation à quatre faces mais après mise en forme.

Ces quatre faces sont constituées de deux faces centrales 18 et de deux faces latérales 19 du revêtement 4. On note également la présence d'encoches 17 de positionnement du revêtement quatre faces 4. Ces encoches peuvent être de petite taille 17a ou de grande taille 17b. A l'instar des encoches 13 vues précédemment, elles facilitent le pliage du revêtement 4 pour sa mise en forme puis sa mise en place au plus près de la cuvette d'analyse 1, qui est elle-même constituée de petites nervures 25 et de grandes nervures 26 bien visibles sur les Figures 3 à 6.

Les nervures 25 et 26 de la barrette 7 et les encoches 13, 17a et 17b des revêtements 14 et 4 coopèrent ensemble pour le bon positionnement l'un par rapport à l'autre.

La **Figure 9** représente une vue en perspective d'un mode de réalisation du manchon 5 avant la mise en place en son sein de la feuille de papier rétro-réfléchissant 4. Le manchon 5 à l'instar du revêtement rétro-réfléchissant 4 est constitué de deux parois centrales 27 et de deux parois latérales 28. Il y a également la présence en partie supérieure des deux parois latérales 28 d'un épaulement 29 dont la fonction sera explicitée plus avant ultérieurement.

La **Figure 10** représente une vue en perspective d'un mode de réalisation du manchon ou clip 5 selon la Figure 9 après la mise en place en son sein de la feuille de papier rétro-réfléchissant selon la Figure 4. Dans cette configuration on comprend mieux le rôle des épaulements 29 qui permettent de maintenir en position le revêtement 4 sans usage de colle, adhésif ou autres. Bien entendu il pourrait n'y avoir qu'un seul épaulement. Ou bien il pourrait n'y avoir qu'un épaulement sur au moins l'une des parois centrale 27 ou encore de un épaulement sur chacune des parois 27 et 28.

Dans le cas d'un revêtement rétro-réfléchissant 4 solidaire du manchon 5, ce dernier pourra donc se passer de la présence d'épaulement.

Cette invention est pertinente dans tous les systèmes optiques, pour accroître un signal optique et par conséquent une mesure physique. C'est un moyen passif d'augmenter le signal en évitant la perte de photons dans le système. Tous les systèmes de mesure dans lesquels un faisceau de lumière incident traverse un milieu à caractériser et dont on mesure en retour une modification de la lumière incidente par le milieu traversé sont susceptibles d'être intéressés par cette invention. Les techniques de fluorescence peuvent tirer parti de cette invention. Il est à noter que cette invention est particulièrement intéressante lorsque que les faisceaux lumineux ne sont pas de lumière cohérente comme les lasers par exemple. Ce système permet également de diminuer la taille des cellules de mesures dans la mesure où la lumière passe deux fois à travers et au même endroit sans imposer de grande contrainte de positionnement, d'alignement. Un circuit micro-fluidique avec une diode électroluminescente en excitation pourrait donc y trouver un avantage en simplification et amplification du signal en réponse.

Ce système est particulièrement bien adapté lorsque l'échantillon est en très faible volume et/ou lorsque la cellule de mesure est de volume très réduit.

### REFERENCES

1. Cuvette d'analyse
2. Paroi verticale cloisonnant la cuvette 1
3. Fond cloisonnant la cuvette 1
4. Revêtement interne quatre faces
5. Manchon
6. Zone de la cuvette 1 non recouverte par le manchon
7. Barrette d'analyse
8. Pluralité de cuvettes aussi appelées compartiments
9. Support
10. Première cuvette
11. Cône de détection
12. Ergot de positionnement
13. Encoches de positionnement du revêtement 14
14. Revêtement interne trois faces
15. Face centrale du revêtement 14
16. Deux faces latérales du revêtement 14
17a. Petites encoches de positionnement du revêtement 4
17b. Grandes encoches de positionnement du revêtement 4
18. Deux faces centrales du revêtement 4
19. Deux faces latérales du revêtement 4
20. Face interne du manchon 5
21. Petites encoches de positionnement du manchon 5
22. Grandes encoches de positionnement du manchon 5
23. Fond de la cuvette 1 de forme à angle droit
24. Fond de la cuvette de forme hémisphérique
25. Petites nervures de la cuvette d'analyse 1
26. Grandes nervures de la cuvette d'analyse 1
27. Deux parois centrales du manchon 5
28. Deux parois latérales du manchon 5
29. Epaulement du manchon 5
F1. Faisceau d'excitation
F2. Faisceau d'émission

## Revendications

1. Cuvette d'analyse (1) d'un échantillon biologique, fabriquée en un matériau transparent ou translucide, cuvette constituée d'au moins une paroi verticale (2) et d'un fond (3) cloisonnant la cuvette, dans laquelle une réaction enzymatique entre un substrat et une enzyme peut être réalisée, ladite réaction aboutissant à un produit de dégradation sous la forme d'une molécule fluorescente, **caractérisée par le fait qu'**une partie de la cuvette est recouverte extérieurement d'un manchon (5) dont le revêtement interne (4 ou 14) en contact avec ladite cuvette (1) est en matériau rétroréfléchissant, la cuvette étant partiellement recouverte par le manchon de façon à créer au moins une zone (6) de lecture de fluorescence au niveau du fond de la cuvette (1).

2. Cuvette, selon la revendication 1, **caractérisée par le fait que** la forme intérieure du manchon (5) épouse partiellement la forme extérieure de la cuvette (1) à l'exception de l'au moins une zone (6) permettant, d'une part, l'éclairage à une longueur d'onde d'excitation, d'autre part, la détection de la longueur d'onde d'émission depuis l'extérieur de ladite cuvette.

3. Cuvette, selon l'une quelconque des revendications 1 ou 2, **caractérisée par le fait que** le matériau rétro- réfléchissant (4 ou 14) est soit à prisme soit à billes .

4. Cuvette, selon l'une quelconque des revendications 1 ou 2, **caractérisée par le fait que** le manchon (5) est fixé sur la cuvette (1) par collage sans détérioration des qualités optiques de la face intérieure dudit manchon.

5. Cuvette, selon la revendication 4, **caractérisée par le fait que** la colle est transparente ou translucide et n'absorbe pas les ultraviolets.

6. Cuvette, selon l'une quelconque des revendications 1 ou 2, **caractérisée par le fait que** le manchon (5) est fixé sur la cuvette (1) par clipsage mécanique.

7. Cuvette, selon l'une quelconque des revendications 1 à 3 ou 6, **caractérisée par le fait que** le revêtement interne en matériau rétro-réfléchissant (4 ou 14) n'est pas solidaire de la cuvette (1) mais est pris en sandwich entre ladite cuvette (1) et le manchon (5), formant clips.

8. Cuvette, selon l'une quelconque des revendications 1 à 7, **caractérisée par** le fait le manchon (5) est présent en tout ou partie au niveau de la ou des cloisons latérales de la cuvette (1) et qu'il est absent au niveau du fond (3) de la cuvette (1) .

9. Barrette d'analyse pour effectuer une analyse d'un échantillon, la barrette d'analyse (7) comprenant une pluralité de cuvettes (8) adaptées pour contenir et stocker un liquide et pour être utilisée en combinaison avec un cône (11) lors de l'analyse, le cône (11) étant apte à aspirer une quantité de liquide d'une première cuvette (8) et refouler tout ou partie de cette quantité de liquide dans une deuxième cuvette (8 ou 1), ladite barrette d'analyse (7) comprenant une cuvette (1) telle que décrite dans l'une quelconque des revendications 1 à 8.

10. Barrette, selon la revendication 9, **caractérisée par le fait que** la pluralité des cuvettes (8 et 1) sont positionnées selon un axe longitudinal et que la première cuvette (10) est adaptée pour recevoir l'échantillon et la dernière cuvette (1) est adaptée pour permettre la lecture d'un signal émis par le milieu réactionnel, issu de l'échantillon, lors de l'analyse et correspond à la cuvette (1) telle que décrite dans l'une quelconque des revendications 1 à 7.

11. Dispositif d'analyse pour une barrette d'analyse (7), selon la revendication 9 ou 10, ledit dispositif d'analyse contenant un support de ladite barrette (7) et un mécanisme de guidage afin d'imposer le déplacement de la barrette (7) d'une première position vers une deuxième position.

## Patentansprüche

1. Näpfchen (1) zur Analyse einer biologischen Probe, hergestellt aus einem transparenten oder durchscheinenden Material, wobei das Näpfchen aus mindestens einer vertikalen Wand (2) und einem Boden (3) besteht, der das Näpfchen unterteilt, in dem eine enzymatische Reaktion zwischen einem Substrat und einem Enzym erfolgen kann, wobei die Reaktion zu einem Abbauprodukt in der Form eines Fluoreszenzmoleküls führt, **dadurch gekennzeichnet, dass** ein Teil des Näpfchens außen mit einer Hülse (5) bedeckt ist, deren innere Beschichtung (4 oder 14), die mit dem Näpfchen (1) in Kontakt steht, aus einem retroreflektierenden Material besteht, wobei das Näpfchen teilweise von der Hülse bedeckt ist, so dass mindestens ein Fluoreszenzlesebereich (6) auf der Höhe des Bodens des Näpfchens (1) erzeugt wird.

2. Näpfchen nach Anspruch 1, **dadurch gekennzeichnet, dass** die innere Form der Hülse (5) teilweise an die äußere Form des Näpfchens (1) angepasst ist, abgesehen von dem mindestens einen Bereich (6), der einerseits die Beleuchtung bei einer Anregungswellenlänge und andererseits das Erfassen der Emissionswellenlänge von außerhalb des Näpfchens gestattet.

3. Näpfchen nach einem der Ansprüche 1 oder 2, **dadurch gekennzeichnet, dass** das retroreflektierende Material (4 oder 14) entweder auf Prismen oder auf Kügelchen beruht.

4. Näpfchen nach einem der Ansprüche 1 oder 2, **dadurch gekennzeichnet, dass** die Hülse (5) durch Kleben an dem Näpfchen (1) befestigt ist, ohne Beeinträchtigung der optischen Eigenschaften der Innenfläche der Hülse.

5. Näpfchen nach Anspruch 4, **dadurch gekennzeichnet, dass** der Klebstoff transparent oder durchscheinend ist und keine UV-Strahlung absorbiert.

6. Näpfchen nach einem der Ansprüche 1 oder 2, **dadurch gekennzeichnet, dass** die Hülse (5) durch mechanisches Klammern an dem Näpfchen (1) befestigt ist.

7. Näpfchen nach einem der Ansprüche 1 bis 3 oder 6, **dadurch gekennzeichnet, dass** die innere Beschichtung aus retroreflektierendem Material (4 oder 14) mit dem Näpfchen (1) nicht fest verbunden ist, sondern unter Bildung von Klammern sandwichartig zwischen dem Näpfchen (1) und der Hülse (5) liegt.

8. Näpfchen nach einem der Ansprüche 1 bis 7, **dadurch gekennzeichnet, dass** die Hülse (5) gänzlich oder teilweise auf der Höhe der seitlichen Trennwandung oder -wandungen des Näpfchens (1) vorliegt und dass sie auf der Höhe des Bodens (3) des Näpfchens (1) fehlt.

9. Analyseleiste zur Durchführung einer Analyse einer Probe, wobei die Analyseleiste (7) eine Vielzahl von Näpfchen (8) umfasst, die dazu ausgeführt sind, eine Flüssigkeit zu enthalten und zu lagern und bei der Analyse in Kombination mit einem Konus (11) verwendet zu werden, wobei der Konus (11) in der Lage ist, eine Flüssigkeitsmenge aus einem ersten Näpfchen (8) anzusaugen und diese Flüssigkeitsmenge ganz oder teilweise in ein zweites Näpfchen (8 oder 1) auszustoßen, wobei die Analyseleiste (7) ein Näpfchen (1) umfasst, wie es in einem der Ansprüche 1 bis 8 beschrieben wird.

10. Leiste nach Anspruch 9, **dadurch gekennzeichnet, dass** die Vielzahl von Näpfchen (8 und 1) entlang einer Längsachse positioniert sind und dass das erste Näpfchen (10) zur Aufnahme der Probe ausgeführt ist und das letzte Näpfchen (1) dazu ausgeführt ist, das Lesen eines bei der Analyse von dem Reaktionsmedium, das sich aus der Probe ergibt, abgegebenen Signals zu gestatten, und dem Näpfchen (1), wie es in einem der Ansprüche 1 bis 7 beschrieben wird, entspricht.

11. Analysevorrichtung für eine Analyseleiste (7) nach Anspruch 9 oder 10, wobei die Analysevorrichtung einen Träger der Leiste (7) und einen Führungsmechanismus enthält, der die Bewegung der Leiste (7) aus einer ersten Position in eine zweite Position erzwingt.

## Claims

1. Cuvette (1) for analysis of a biological sample, made of a transparent or translucent material, said cuvette consisting of at least one vertical wall (2) and a bottom (3) partitioning the cuvette, in which an enzymatic reaction between a substrate and an enzyme can be carried out, said reaction leading to a degradation product in the form of a fluorescent molecule, **characterized in that** a part of the cuvette is covered on the outside by a sleeve (5) of which the inner coating (4 or 14) in contact with said cuvette (1) is made of retro-reflective material, the cuvette being partially covered by the sleeve in order to create at least one zone (6) for fluorescence reading at the bottom of the cuvette (1).

2. Cuvette according to Claim 1, **characterized in that** the interior shape of the sleeve (5) partially matches the exterior shape of the cuvette (1), with the exception of the at least one zone (6) which enables, on the one hand, illumination at an excitation wavelength and, on the other hand, detection of the emission wavelength from the outside of said cuvette.

3. Cuvette according to either of Claims 1 and 2, **characterized in that** the retro-reflective material (4 or 14) is either prism-based or bead-based.

4. Cuvette according to either of Claims 1 and 2, **characterized in that** the sleeve (5) is attached to the cuvette (1) by adhesive bonding, without deterioration of the optical qualities of the interior face of said sleeve.

5. Cuvette according to Claim 4, **characterized in that** the adhesive is transparent or translucent and does not absorb ultraviolet rays.

6. Cuvette according to either of Claims 1 and 2, **characterized in that** the sleeve (5) is attached to the cuvette (1) by mechanical clip-fastening.

7. Cuvette according to any one of Claims 1 to 3 or 6, **characterized in that** the inner coating made of retro-reflective material (4 or 14) is not secured to the cuvette (1) but is sandwiched between said cuvette (1) and the sleeve (5), forming clips.

8. Cuvette according to any one of Claims 1 to 7, **characterized in that** the sleeve (5) is totally or partially present at the level of the lateral partition(s) of the cuvette (1) and that it is absent at the bottom (3) of the cuvette (1).

9. Analysis bar for carrying out an analysis of a sample, the analysis bar (7) comprising a plurality of cuvettes (8) suitable for containing and storing a liquid and for being used in combination with a tip (11) during the analysis, the tip (11) being capable of suctioning an amount of liquid from a first cuvette (8) and expelling all or part of this amount of liquid into a second cuvette (8 or 1), said analysis bar (7) comprising a cuvette (1) as described in any one of Claims 1 to 8.

10. Bar according to Claim 9, **characterized in that** the plurality of cuvettes (8 and 1) are positioned along a longitudinal axis and **in that** the first cuvette (10) is suitable for receiving the sample and the final cuvette (1) is suitable for allowing the reading of a signal emitted by the reaction medium, resulting from the sample, during the analysis, and corresponds to the cuvette (1) as described in any one of Claims 1 to 7.

11. Analysis device for an analysis bar (7) according to Claim 9 or 10, said analysis device containing a support for said bar (7) and a guiding mechanism in order to impose the movement of the bar (7) from a first position to a second position.
